(19) Europäisches Patentamt
European Patent Office
Office européen des brevets

(11) **EP 1 571 481 A1**

(12) **EUROPÄISCHE PATENTANMELDUNG**

(43) Veröffentlichungstag:
07.09.2005 Patentblatt 2005/36

(51) Int Cl.⁷: **G02B 27/12**, G02B 5/04

(21) Anmeldenummer: 04100735.2

(22) Anmeldetag: 25.02.2004

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **AgfaPhoto GmbH**
**51373 Leverkusen (DE)**

(72) Erfinder: **Müller, Peter**
**86415, Mering (DE)**

(54) **Beleuchtungssystem**

(57)     Die vorliegende Erfindung betrifft ein Beleuchtungssystem mit mindestens zwei räumlich getrennten Lichtquellen (12, 14) unterschiedlicher Emissionsspektren und einem optischen Element (32), wobei das optische Element (32) eine erste Vielzahl von Mikroprismen (44 a-f) aufweist, die die Strahlrichtung des Lichts der ersten Lichtquelle (12) in einer definierten Weise ändern, und eine zweite Vielzahl von Mikroprismen (42 a-f), die die Strahlrichtung des Lichts der zweiten Lichtquelle (14) in einer definierten Weise ändern, wobei die der ersten Lichtquelle (12) zugeordneten Mikroprismen (44 a-f) und die der zweiten Lichtquelle (14) zugeordneten Mikroprismen (42 a-f) so angeordnet sind, dass sich entlang einer Dimension des optischen Elements (32) mehrmals ein oder mehrere der ersten Lichtquelle (12) zugeordnete Mikroprismen (44 a-f) und der zweiten Lichtquelle (14) zugeordnete Mikroprismen (42 a-f) abwechseln.

FIG. 3

**Beschreibung**

Die vorliegende Erfindung betrifft ein Beleuchtungssystem mit mindestens zwei räumlich getrennten Lichtquellen unterschiedlicher Emissionsspektren und einem optischen Element zur Erzeugung einer definierten Intensitäts- und Strahlwinkelverteilung für jede Quelle auf einer Nutzfläche.

Um eine Nutzfläche mit mehreren Farben beleuchten zu können, werden häufig mehrere separate Lichtquellen mit unterschiedlichen Emissionsspektren eingesetzt, wobei die einzelnen Emissionsspektren jeweils nur einen Teil des Gesamtbeleuchtungsspektrums umfassen. Durch die Aufteilung des Gesamtbeleuchtungsspektrums und individuelle Ansteuerung der Lichtquellen kann kontrolliert werden mit welcher Gewichtung der einzelnen Farbanteile und mit welcher absoluten Intensität die Nutzfläche im zeitlichen Verlauf beleuchtet wird.
In einer typischen Anwendung soll mit einem solchen Beleuchtungssystem ein Objekt beleuchtet und anschließend das vom Objekt reflektierte bzw. durch das Objekt transmittierte Licht mit einem Empfänger (Kamera, Auge etc.) analysiert werden.

In vielen Fällen ist es vorteilhaft, wenn die örtliche Intensitätsverteilung am Empfänger für verschiedene Farben weitgehend identisch ist, wenn das Reflexions- bzw. Transmissionsverhalten des Objektes für diese Farben identisch ist, damit Unterschiede in den Farbverhältnissen am Empfänger ausschließlich Unterschiede im Objekt wiedergeben.

Für die Intensitätsverteilung am Empfänger ist in der Regel nicht nur die Intensitätsverteilung am Objekt entscheidend sondern auch der Winkel unter dem die Strahlung auf das Objekt fällt. Bei LCDs ist zum Beispiel bekannt, dass der Kontrast des Displays typischerweise stark vom Einfallswinkel der Beleuchtung abhängt. Wird ein solches LCD in mehreren Farben beleuchtet, wobei der Einfallswinkel der Beleuchtung für jede Farbe unterschiedlich ist, und dieses LCD auf eine Empfängerfläche abgebildet, dann führt die Winkelabhängigkeit des Kontrastes zu einer starken Farbinhomogenität auf der Empfängerfläche.

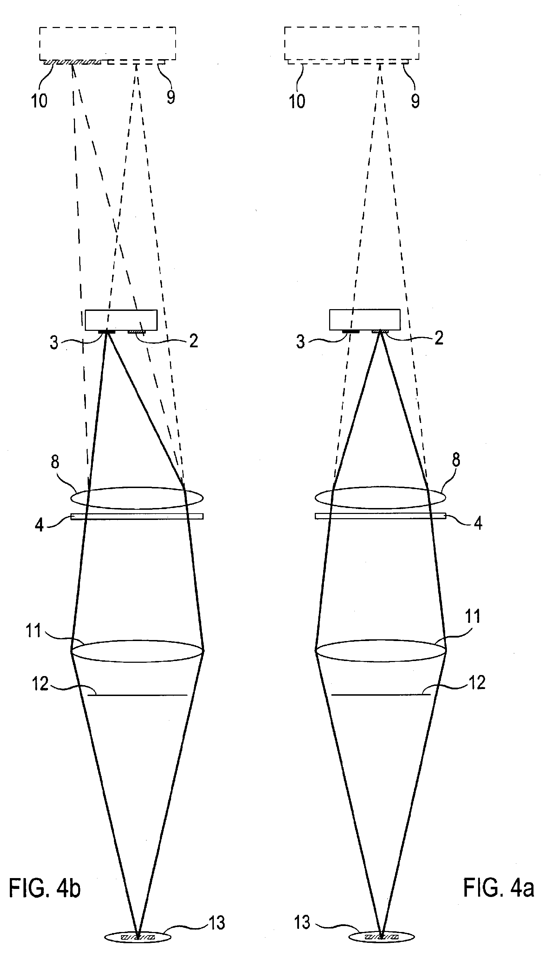

Im Stand der Technik werden für diese Aufgabe üblicherweise in derartigen Beleuchtungssystemen dichroitische Strahlteiler als optische Elemente verwendet, um Farbkanäle von mehrfarbigen Lichtquellen, beispielsweise LEDs, zu überlagern. Aus der EP 1 003 062 A1, die zur Formulierung des Oberbegriffs des unabhängigen Anspruchs herangezogen wurde, ist beispielsweise bekannt, ein dichroitisches Prisma in Form eines Strahlteilerwürfels zu verwenden, um das Licht mehrerer Lichtquellen unterschiedlicher Emissionsspektren zusammenzuführen, um damit eine Quelle für weißes Licht bei Verwendung von LEDs zu realisieren. Zur Verbesserung der Homogenität und der Lichtausbeute werden weiterhin verschiedene Maßnahmen vorgeschlagen, beispielsweise die Verwendung eines Linsenarrays sowie von Prismenarrays. Jedes der verwendeten Linsenarrays ist genau einer bestimmten Lichtquelle zugeordnet, siehe die dortige Figur 4(a).

Jedoch geht auch die aus dem Stand der Technik bekannte Vorgehensweise mit bedeutenden Nachteilen einher:

- Die Kombination von Farben mit dichroitischen Strahlenteilern funktioniert nur, wenn die Emissionsspektren streng getrennt sind. Bei stark überlappenden Emissionsspektren sind dichroitische Strahlenteiler ungeeignet.
- Dichroitische Strahlenteiler sind vergleichsweise teuer in der Herstellung.
- Bei mehreren separaten Lichtquellen ist im Allgemeinen eine aufwändige Justage der Beleuchtungsoptik notwendig, um die Farben sauber zu überlagern.

Die Aufgabe der vorliegenden Erfindung besteht deshalb darin, ein Beleuchtungssystem bereitzustellen, das Licht aus separaten, spektral unterschiedlichen Lichtquellen auf eine Nutzfläche (im oben genannten Fall den Empfänger) bringt und gleichzeitig kostengünstiger und mit geringerem Justageaufwand der Beleuchtungsoptik zu realisieren ist als das aus dem Stand der Technik bekannte Beleuchtungssystem. Darüber hinaus verfügt dieses Beleuchtungssystem über das Potenzial, die Strahlung von Lichtquellen mit stark überlappenden Emissionsspektren zusammenzuführen.

Diese Aufgabe wird gelöst durch ein Beleuchtungssystem mit den Merkmalen von Patentanspruch 1.

Die Erfindung basiert auf dem Prinzip, dass die Beleuchtung eines Objektes mit räumlich getrennten Lichtquellen unter verschiedenen Winkeln im Grenzfall in die winkelidentische Beleuchtung übergeht, wenn am Ort des Objektes die Differenzen der Einfallswinkel zweier unterschiedlicher Lichtquellen sehr klein werden. Praktisch kann dies erreicht werden, indem zwischen eine kleine Anzahl relativ großer, räumlich getrennter Lichtquellen und das zu beleuchtende Objekt ein optisches Element gebracht wird, das zumindest über einen Teil seines Querschnittes ein sehr große Anzahl von Mikrostrukturen aufweist, die das Licht der Lichtquellen ablenken.
Die Ablenkung des Lichts kann dabei auf Grund von Reflexion und/oder Brechung erfolgen. Es wird ausdrücklich darauf hingewiesen, dass für die Ablenkung durch Lichtbrechung unterschiedliche Ein- und Ausfallswinkel von einem optisch dichteren in ein optisch dünneres Medium erforderlich sind, wobei Luft nicht notwendigerweise eines der beiden Medien sein muss und auch der Übergang des Brechungsindizes von einem Medium in das andere nicht notwendigerweise stufenweise erfolgen muss, d.h. die Strahlablenkung kann auch an einem kontinuierlichen Brechungsindex-Übergang stattfinden. Der Einfachheit halber wird der Gegenstand der Erfindung im Folgenden an Hand einer Strahlablenkung am Übergang von Luft in Glas, einen transparenten Kunststoff oder ein ähnliches Medium beschrieben. Die Oberflächenkontur der Prismen bestimmt, in welcher Weise ein einfallender Lichtstrahl abgelenkt wird. Die ablenkenden Mikrostrukturen entsprechen damit kleinen Mikroprismen, die an der Oberfläche des optischen Elements angeordnet sind. Die Übergangsfläche zur Luft ist im einfachsten Fall eine ebene, sie kann aber auch eine beliebige andere Kontur besitzen, z.B. den Ausschnitt einer gewölbten Linsenfläche bilden, um Ablenkeigenschaften höherer Ordnung zu erzielen. Entscheidend für die Erfindung ist, dass jeder Lichtquelle eine Teilmenge aller Mikroprismen auf der Oberfläche zugeordnet ist. Diese Mikroprismen sind so über die Gesamtfläche des optischen Elements verteilt und lenken das Licht der ihnen zugeordneten Lichtquelle so ab, dass auf der Empfängerfläche das gewünschte Ausleuchtungsprofil für die jeweils ihnen zugeordnete Lichtquelle entsteht. Um diese Wirkung zu erreichen muss sich der Anstellwinkel der brechenden Fläche der Prismen einer Teilmenge in Abhängigkeit von der Lage auf dem optischen Element ändern. Die Teilmengen der Mikroprismen bilden keine zusammenhängende Flächen auf dem optischen Element, sondern besitzen je nach gewünschtem Ausleuchtungsverhalten eine unterschiedlich starke Durchmischung über die Gesamtfläche des optischen Elements. Dadurch, dass Mikroprismen, die Licht einer Lichtquelle zum Objekt lenken, auf Grund ihrer geringen Größe und ihres geringen Abstandes dicht neben Mikroprismen liegen, die Licht einer anderen Lichtquelle zum Objekt lenken, unterscheiden sich die Winkel, unter denen das Licht der beiden Lichtquellen auf das Objekt fällt, nur minimal. Durch entsprechende Wahl der Prismengröße und der optischen Abstände kann erreicht werden, dass die nach wie vor vorhandenen Unterschiede der Einfallswinkel vernachlässigbar klein werden.

Neben der kostengünstigeren Herstellung im Vergleich zu dichroitischen Strahlteilern ermöglicht die vorliegende Erfindung eine individuelle Steuerbarkeit für Winkelverteilung und Leuchtstärke für jeden Farbauszug.

Bei einem bevorzugten Ausführungsbeispiel sind die Lichtquellen so angeordnet und ausgebildet, dass ihre Strahlungsfelder überlappen. Diese Überlappung findet, in Ausbreitungsrichtung des Lichts, insbesondere bereits vor Auftreffen der Strahlen auf das optische Element, statt. Mit anderen Worten, das optische Element ist im Überlappbereich der Strahlungsfelder der Lichtquellen angeordnet.

Bevorzugt weisen benachbarte Mikroprismen, die unterschiedlichen Lichtquellen zugeordnet sind, unterschiedliches Strahlablenkverhalten auf, insbesondere durch jeweils unterschiedliche Brechungsindizes.

Zur Realisierung unterschiedlichen Strahlenlenkverhaltens können benachbarte Mikroprismen unterschiedliche Oberflächenkonturen aufweisen. Dabei können die Oberflächen auch Übergangszonen zwischen zwei unterschiedlichen Brechungsindizes sein.

Das Strahlablenkverhalten der Mikroprismen ist bevorzugt derart ausgelegt, dass die abgelenkten Strahlen scheinbar von einer einzigen Lichtquelle kommen. Dabei lenken die Mikroprismen die Strahlen der ihr zugeordneten Lichtquellen so ab, dass es für ein optisches System, welches das Licht des Mikroprismenarrays empfängt, so aussieht, als würden die Lichtquellen räumlich übereinander liegen, das heißt im Falle von gleich hellen Lichtquellen in R, G, B würde ein Betrachter an der Position des zu beleuchtenden Objekts eine weiße Lichtquelle sehen. Hierbei lässt sich unterscheiden zwischen einer Ablenkung, bei der die durch Überlappung entstandene Lichtquelle hinter dem optischen Element liegt, die man dann als virtuelle effektive Lichtquelle beschreiben kann, oder vor dem optischen Element, wobei die überlappende Lichtquelle dann als reelle effektive Lichtquelle zu betrachten ist. In beiden Fällen kann das Licht, das von dem optischen Element kommt, mit einem Linsensystem, beispielsweise einem Kondensor, auf ein für alle Lichtquellen überlappendes Bild abgebildet werden. Technisch ist die virtuelle Lichtquelle günstiger zu realisieren, da die erforderlichen Ablenkwinkel für das Mikroprismenarray in der Regel kleiner sind als für die reelle effektive Lichtquelle. Dadurch, dass die überlappende Lichtquelle, das heißt die gemeinsame angenommene Quelle, nur virtuell ist und hinter dem Mikroprismenarray liegt, ist die Baulänge einer derartigen Ausführungsform eines erfindungsgemäßen Beleuchtungssystems in der Regel kleiner. Zu beachten ist, dass die virtuelle Lichtquelle scheinbar außerhalb des gesamten Gerätes liegen kann, im Extremfall unendlich weit entfernt.

Bevorzugt ist ein großer Teil der Mikroprismen ausgelegt, die Strahlung derart abzulenken, dass von jedem Mikroprisma das Licht einer zugeordneten Lichtquelle auf die Nutzfläche abgelenkt wird und das Licht der anderen Lichtquellen so abgelenkt wird, dass es die Nutzfläche nicht erreicht. Es ist darauf hinzuweisen, dass unter Nutzfläche auch die Oberfläche eines dreidimensionalen Objekts verstanden werden kann, d.h. das optische Element also ausgelegt ist, ein bestimmtes Volumen definiert zu beleuchten.

Ein bei der vorliegenden Erfindung verwendetes optisches Element kann auf einfache Weise beispielsweise durch Heißprägung einer Kunststoffplatte hergestellt werden. Eine unter vielen Alternativen der Herstellung besteht darin, die gewünschte Struktur durch Grautonlithographie kostengünstig in einem Ätzschritt in Silizium herzustellen.

Bei einem bevorzugten lithographischen Herstellungsverfahren beträgt die Ätztiefe beispielsweise zwischen 10 und 100 μm, bevorzugt 25 μm. Da die Flächennormalenvektoren der Mikroprismen in alle möglichen Richtungen zeigen können, wäre beispielsweise ein quadratisches Raster ungünstig. Denn wenn bei einem quadratischen Raster die Prismenfläche über die Diagonale gekippt wird, resultiert dies bei gegebener Prismenfläche in einer unerwünscht großen Strukturhöhe (Diagonalenlänge mal Tangens des Kippwinkels). Umgekehrt bedeutet dies, dass bei gegebener Strukturhöhe die Struktur sehr klein gemacht werden müsste, was verstärkt optische Beugungsprobleme verursachen kann. Um ein ideales Verhältnis von Grundfläche zu Strukturhöhe zu erreichen, müsste die Grundfläche eines Mikroprismas ein Kreis sein. Da sich jedoch mit Kreisen eine Fläche nicht geschlossen füllen lässt, stellt das regelmäßige Sechseck die beste Annäherung an einen Kreis dar. Hierbei wird also die Fläche aus einer Wabenstruktur zusammengesetzt. Insbesondere ist die Höhe, die ein über die Ecke gekipptes Sechseck einnimmt, kleiner als die Höhe, die bei gleichem Kippwinkel ein über die Ecke gekipptes Quadrat gleicher Fläche einnimmt.

Bevorzugt beträgt die Vielzahl von Mikroprismen pro Lichtquelle entlang einer Dimension des optischen Elements wenigstens 10, noch bevorzugter wenigstens 50. Üblicherweise werden bei derartigen Lichtquellen je eine (in einigen Fällen wenige) Lichtquellen pro Farbe verwendet. Wird pro Farbe nur je eine Lichtquelle verwendet, so kann eine akzeptable Homogenisierung auf der Nutzfläche nur erreicht werden, indem sich möglichst viele brechende Flächen abwechseln. So bewirkt die Brechung an einer um eine Dimension - gegenüber der Anzahl der Lichtquellen - erhöhten Anzahl von Mikroprismen (10 Mikroprismen) bereits eine Reduktion der Einfallswinkelunterschiede auf der Nutzfläche um ca. eine Größenordnung. Um die Homogenität auf der Nutzfläche zu optimieren, wird immer angestrebt, so viele Mikroprismen wie im Rahmen des Herstellungsverfahrens möglich pro Lichtquelle einzusetzen. Man wird hier jeweils eine für den Anwendungsfall geeignete Anzahl finden müssen. Im Allgemeinen ist jedoch bei einer Anzahl von wenigstens 50 Mikroprismen pro Lichtquelle bei je einer Lichtquelle pro Farbe eine ausreichende Homogenität zu erreichen.

Abhängig von dem Einsatz des Beleuchtungssystems wird ein bestimmtes Verhältnis der Intensitäten der jeweils zu mischenden Farben auf der Nutzfläche benötigt. So ist es z.B. für visuelle Betrachtung und Beleuchtung mit R, G, B wünschenswert eine Mischung von gleichhellen Farben zu gewährleisten, um Farbstiche im Bild zu vermeiden, bei der Beleuchtung von Fotopapier sind die Intensitäten der Farben abhängig von den Empfindlichkeiten des Fotopapiers zu wählen (der Rotanteil muss relativ zum Blauanteil extrem hoch sein). Dies kann durch geeignete Anzahl von Mikroprismen pro Farbe realisiert werden.

Wenn die Gesamtintensität der ersten Farbe auf der Nutzfläche F1 betragen soll, die der zweiten Farbe F2, die tatsächliche Intensität der ersten Farbe am Ort der Mikroprismen I1 sowie die der zweiten Farbe am Ort der Mikroprismen I2, dann berechnet sich das Verhältnis der Anzahl von Mikroprismen pro Lichtquelle (Z1 = Anzahl der Mikroprismen für die erste Lichtquelle, Z2 = Anzahl der Mikroprismen für die zweite Lichtquelle) abhängig vom gewünschten Gesamtintensitätsverhältnis der Farben F1/F2 auf der Nutzfläche und dem tatsächlichen Intensitätsverhältnis I1/I2 der Farben am Ort der Mikroprismen im anzustrebenden Idealfall zu:

$$\frac{Z1}{Z2} = \frac{F1}{F2} \Big/ \frac{I1}{I2}$$

(Hierbei sind die Intensitäten I1 und I2 gegeben durch den Strahlungsfluss pro Flächeneinheit durch die Basisfläche der Mikroprismen).

Diese Gleichung sollte jeweils innerhalb eines Makrobereichs von maximal einem Fünftel der Gesamtdimension eines erfindungsgemäßen Beleuchtungssystems gelten. Je kleiner der Makrobereich ist für den diese Bedingung erfüllt ist, umso homogener wird die Beleuchtung.

Dieser gegenüber dem Stand der Technik entscheidende Vorteil des erfindungsgemäßen Systems (wählbare Farbintensitätsverteilung) lässt sich ebenso bei der Leuchtdichteverteilung auf der Nutzfläche erzielen.

Bei einer bevorzugten Ausführungsform umfassen die Mikroprismen zur Einstellung einer vorgebbaren Leuchtdichteverteilung einerseits wirksame Mikroprismen, die ausgelegt sind, das Licht der ihnen zugeordneten Lichtquelle so zu brechen, dass es auf die Nutzfläche fällt, und andererseits Nullprismen, die ausgelegt sind, das Licht aller Lichtquellen so abzulenken, dass es nicht auf die Nutzfläche fällt. Danach lässt sich auf besonders einfache Weise beispielsweise die Helligkeit im Zentrum an die geringere Randhelligkeit anpassen. Generell kann über die Verteilung von wirksamen Prismen und Nullprismen eine nahezu beliebige Leuchtdichteverteilung erzeugt werden. Beispielsweise kann ein Randabfall dadurch kompensiert werden, dass am Rand eine höhere Dichte der wirksamen Prismen verwendet wird als in der Mitte des optischen Elements. Für eine gleichmäßige, von Makrobereichen abgestrahlte Intensität pro Farbe steigt daher die Anzahl der Nullprismen mit zunehmender Intensität der jeweiligen Farbe im Bereich der Mikroprismen.

Die Mikroprismen können auf einer Oberfläche oder auf beiden Oberflächen des optischen Elements angeordnet sein, wobei das optische Element bevorzugt als flache Scheibe ausgebildet ist. Bei Anordnung von Mikroprismen auf beiden Oberflächen wird bevorzugt vorgesehen, dass die Fläche, die von einem größeren Mikroprisma auf einer der Oberflächen eingenommen wird, der Fläche mehrerer kleinerer Mikroprismen auf der anderen Oberfläche entspricht. Sind die Lichtquellen durch mehrere Einzellichtquellen realisiert, kann vorgesehen sein, die größeren Mikroprismen auszulegen, für eine zusammenhängende Menge von Einzellichtquellen zumindest einen Teil der Gesamtstrahlablenkung zur Nutzfläche zu übernehmen und die kleineren Mikroprismen auszulegen, den restlichen Anteil der Strahlablenkung zu bewirken. Dies berücksichtigt, dass eine brechende Fläche bei Verwendung gängiger Materialien wie PMMA einen Strahl um einen Winkel in der Größenordnung von 48 ° ablenken kann. Für eine stärkere Ablenkung sind mehrere brechende Flächen notwendig. Bevorzugt ist das optische Element daher beispielsweise ausgebildet als Fresnellinse mit großen Fresnelzonen auf der einen Seite und kleinen Mikroprismastrukturen einschließlich Nullprismen für die Homogenisierung auf der anderen Seite des optischen Elements. Ein Kollimator könnte damit auf einfache Weise in die Struktur integriert werden.

Ein vorteilhaftes Beleuchtungssystem sollte so ausgebaut sein, dass das optische Element mit den Mikroprismen nur die Homogenisierung der Strahlung bewirken muss, die notwendige Strahlführung (z.B. Bündelung in die Eintrittspupille eines abbildenden Systems) aber mittels weiter optischer Elemente realisiert wird.

Um sicherzustellen, dass die Einfallswinkel auf das optische Element möglichst einheitlich sind, kann ein kollimierendes System zwischen den Lichtquellen und dem optischen Element angeordnet sein. Alternativ oder zusätzlich kann ein Kondensor vorgesehen sein, der das von der scheinbar einen Lichtquelle kommende Licht in die Eintrittspupille eines abbildenden Systems abbildet.

Bevorzugt weisen die Lichtquellen LEDs und/ oder Vakuumfluoreszenzröhren und/oder Entladungslampen und/oder Leuchtstoffröhren auf.

Neben den bereits erwähnten zwei Lichtquellen mit unterschiedlichem Emissionsspektrum kann mindestens eine weitere Lichtquelle mit einem weiteren Emissionsspektrum vorgesehen sein. Bei Lichtquellen mit drei unterschiedlichen Emissionsspektren z.B. R, G, B, beispielsweise zum Projizieren von Bildern oder Belichten von Fotopapier, bei Lichtquellen mit vier bis fünf Emissionsspektren R, G, B + R (Dia) + B (Dia) oder IR, also beispielsweise ein Beleuchtungssystem für einen Filmscanner mit unterschiedlichen Beleuchtungsspektren für Farbnegativfilme bzw. Diapositive. Es ist darauf hinzuweisen, dass es in vielen Anwendungen der vorliegenden Erfindung von Vorteil ist, wenn die Farbe des Objekts genau bestimmt werden kann, wobei die Farbe nicht unbedingt R, G oder B bedeutet. Zum Beispiel benötigt man zum Scannen von Banknoten UV-Licht, visuelles Licht und/oder IR-Licht. Je mehr Lichtquellen unterschiedlicher Spektren verwendet werden, umso mehr Informationen lassen sich mit einem Sensor über die Remissions- beziehungsweise Transmissionsspektren der beleuchteten Objekte erhalten.

Die Lichtquellen sollten vorzugsweise mit einem vorgebbaren Mindestabstand voneinander angeordnet sein, so dass gewährleistet ist, dass die jeweils einer Lichtquelle zugeordneten Mikroprismen jeweils nur das Licht dieser Lichtquelle auf die Nutzfläche lenken. Der vorgebbare Mindestabstand hängt davon ab, wie sauber die Mikroprismen ablenken. Der Winkelabstand der genutzten Bereiche von zwei benachbarten Lichtquellen auf der Eingangsseite des Mikroprismenarrays muss größer sein als die Winkeltoleranz beim Ablenken der Lichtstrahlen. Bevorzugt ist der Winkelabstand mindestens doppelt so groß wie die Ablenktoleranz.

Um die Zentren der Lichtquellen trotz gegebenen Abstandes möglichst nahe beieinander anzuordnen, können die Lichtquellen in Form eines Hexagons angeordnet werden.

Weitere vorteilhafte Ausführungsformen der Erfindung ergeben sich aus den Unteransprüchen.

Im Nachfolgenden wird nunmehr ein Ausführungsbeispiel der Erfindung unter Bezugnahme auf die beigefügten Zeichnungen näher beschrieben.

Es zeigen:

Fig. 1     in schematischer Darstellung ein Beleuchtungssystem mit zwei Lichtquellen nach dem Stand der Technik;

Fig. 2     eine schematische Darstellung eines Ausführungsbeispiels eines erfindungsgemäßen Beleuchtungssystems;

Fig. 3     eine schematische Darstellung eines erfindungsgemäßen Beleuchtungssystems im Detail;

Fig. 4a    eine schematische Darstellung eines weiteren Ausführungsbeispiels eines erfindungsgemäßen Beleuchtungssystems mit angedeuteter virtueller Lichtquelle;

Fig. 4b    eine schematische Darstellung entsprechend der Fig. 4a, jedoch mit angedeuteten zwei virtuellen Lichtquellen;

Fig. 5     eine schematische Darstellung eines weiteren Ausführungsbeispiels eines erfindungsgemäßen Beleuchtungssystems in Detailansicht und

Fig. 6     eine schematische Darstellung der Mikrooberfläche des optischen Elements.

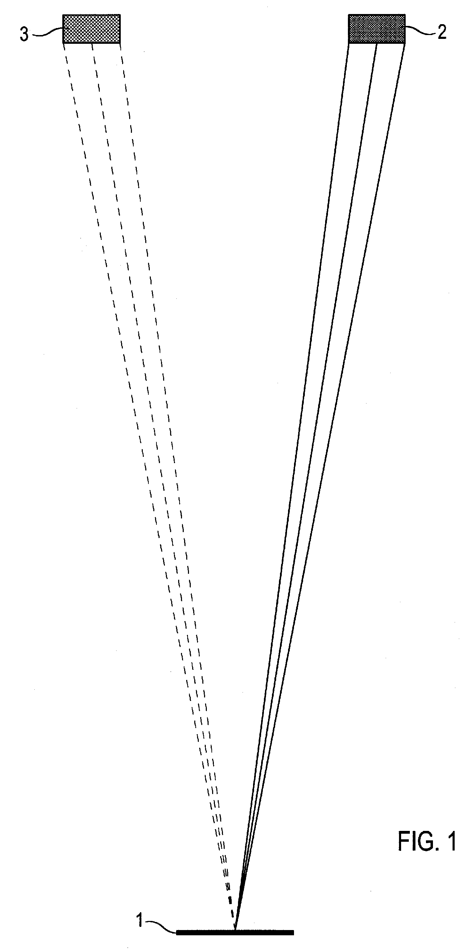

Fig. 1 zeigt in schematischer Darstellung ein herkömmliches Beleuchtungssystem, wobei ein Objekt 1 mittels einer ersten Lichtquelle 2 und einer zweiten Lichtquelle 3 beleuchtet wird. Die Lichtquellen 2 und 3 sind räumlich getrennt und weisen unterschiedliche Emissionsspektren auf. So kann beispielsweise eine Lichtquelle 2 blaues Licht emittieren, während die andere Lichtquelle 3 rotes Licht emittiert. Wie für einen Punkt auf dem Objekt beispielhaft dargestellt, treffen die von den jeweiligen Lichtquellen ausgesandten Strahlen aus unterschiedlichen Winkeln auf jeden Objektpunkt auf. Ferner ist bei einer derartigen Beleuchtung die Farbverteilung auf dem Objekt 1 inhomogen. Setzt man gleiche Intensitäten der Lichtquellen 2 und 3 voraus, so dominiert auf dem Objekt 1 die jeweilige Farbe der Lichtquelle, welche in diesem Bereich des Objekts 1 den geringeren Abstand von der Lichtquelle 2, 3 hat. So würde im Beispiel der rechte Bereich des Objekts 1 bei gleicher Intensität der Lichtquellen 2 und 3 blauer erscheinen, der linke Objektbereich dagegen roter. Für viele Anwendungen ist es jedoch zwingend notwendig, eine möglichst homogene Beleuchtung zu gewährleisten. Dabei umfasst die angestrebte Beleuchtungshomogenität sowohl Homogenität in der Farbe als auch Homogenität in der Winkelverteilung der auftreffenden Strahlen am Ort des zu beleuchtenden Objekts 1.

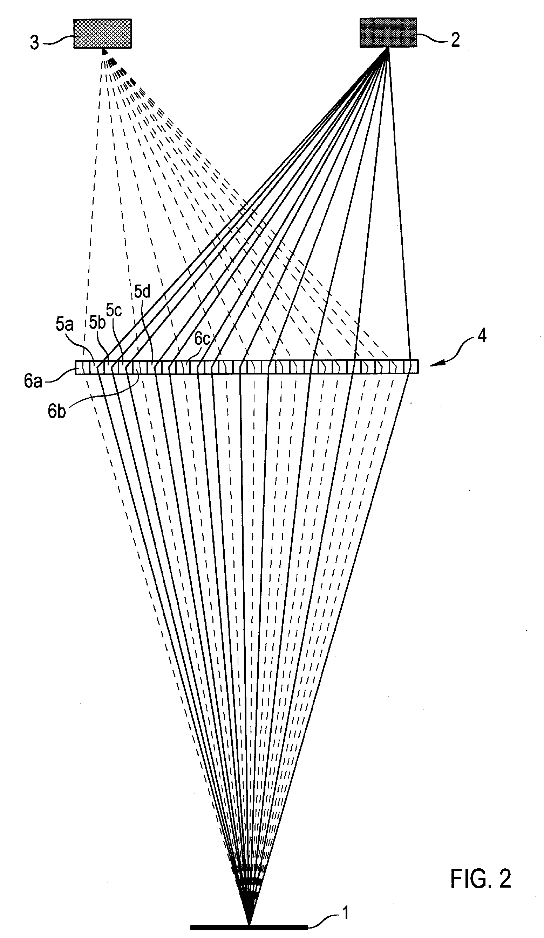

Wie in Fig. 2 schematisch dargestellt, wird deshalb zur Homogenisierung der von den Lichtquellen 2 und 3 ausgesandten Strahlung ein optisches Element 4 in den Strahlengang zwischen Lichtquellen und zu beleuchtendem Objekt 1 eingebracht. Das optische Element 4 ist erfindungsgemäß aus Mikrobereichen aufbaut, wobei wechselweise Mikrobereiche (z. B. 5a- 5d) der Lichtquelle 2 zugeordnet sind, während dazwischenliegende Mikrobereiche (z. B. 6a- 6c) der anderen Lichtquelle 3 zugeordnet sind. Die der jeweiligen Lichtquelle zugeordneten Mikrobereiche leiten das Licht dieser Lichtquelle auf das zu beleuchtende Objekt 1, während sie das Licht der anderen Lichtquelle, zumindest teilweise, vom Objekt 1 weglenken oder absorbieren. Durch diese wechselweise bereichsweise Einteilung des optischen Elements 4 in Mkrobereiche, welche jeweils das Licht nur einer der Lichtquellen passieren lassen, wird wie in Fig. 2 deutlich zu sehen ist, eine Homogenisierung sowohl der Winkelverteilung als auch der Farbverteilung der beleuchtenden Strahlung am Ort des Objekts 1 erreicht.

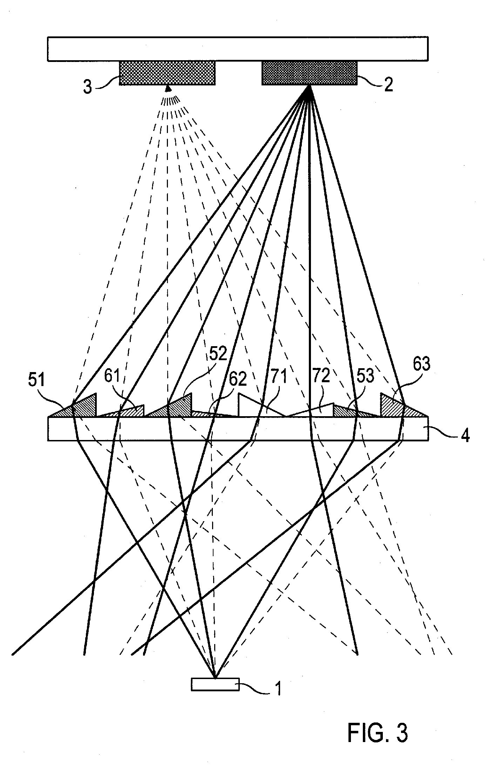

Fig. 3 zeigt eine detailliertere Ansicht des Beleuchtungssystems, aus der die durch den Aufbau des optischen Elements 4 erreichten Strahlengänge deutlicher sichtbar werden. Hier weisen die Mikrobereiche des optischen Elements 4 jeweils Mikroprismen (51 - 53, 61 -63, 71, 72) auf. Dabei sind die Mikroprismen 51 - 53 der ersten Lichtquelle 2, die Mikroprismen 61 -63 der Lichtquelle 3 zugeordnet. Ferner sind sogenannte Nullprismen 71 und 72 dargestellt, welche so aufgebaut sind, dass sie kein Licht der Lichtquellen 2 und 3 zum zu beleuchtenden Objekt 1 passieren lassen. Wie aus der Abbildung deutlich hervorgeht, leiten die der ersten Lichtquelle 2 zugeordneten Mikroprismen 51 - 53 das Licht der Lichtquelle 2 auf das zu beleuchtende Objekt 1, während sie das Licht der Lichtquelle 3 vom zu beleuchtenden Objekt 1 weglenken. Die Prismen 61 - 63 sind dagegen der Lichtquelle 3 zugeordnet, sie sind so aufgebaut, dass das durch sie hindurchtretende Licht der Lichtquelle 3 auf das zu beleuchtende Objekt 1 gelenkt wird, während das Licht der Lichtquelle 2 vom Objekt 1 weggelenkt wird. Da die Prismen 51 -53 und 61-63 welche jeweils einer anderen Lichtquelle zugeordnet sind abwechselnd auf dem optischen Element 4 angeordnet sind, findet eine Vermischung der Farben, welche von den Lichtquellen 2 und 3 ausgesandt werden statt und am Ort des optischen Elements 4 ergibt sich eine gewisse Homogenisierung der Winkelverteilung der auftreffenden Strahlen. Durch das Vorsehen sogenannter Nullprismen 71 - 72 am optischen Element 4 kann die Strahlung des Beleuchtungssystems gezielt reduziert werden. An Stelle der Mikroprismen können alle bekannten lichtbrechenden Elemente verwendet werden, welche in Mikroform herstellbar sind und das Licht unterschiedlicher Wellenlängen unterschiedlich behandeln. Ferner wären auch Mikroelemente vorstellbar, welche das Licht einer Lichtquelle passieren lassen, während sie das Licht der anderen Lichtquelle absorbieren. Wichtig ist für die erfindungsgemäße Anordnung nur, dass das optische Element 4 in Mikrobereiche eingeteilt wird, welche wechselweise das Licht unterschiedlicher Lichtquellen zum zu beleuchtenden Objekt 1 passieren lassen, während sie das Licht anderer Lichtquellen vom Objekt 1 weglenken bzw. absorbieren.

Fig. 4 zeigt ein weiteres aber vorteilhaftes Ausführungsbeispiel eines erfindungsgemäßen Beleuchtungssystems. Die in der Fig. 4a und 4b jeweils dargestellten Elemente dieses Beleuchtungssystems sind zwei getrennte Lichtquellen 2 und 3, ein Kollimator 8 durch den entsprechende virtuelle Lichtquellen 9 und 10 erzeugt werden, ein Mikroprismenarray 4 als optisches Element, eine Kondensoroptik 11, ein abzubildendes Objekt 12, bei dem es sich beispielsweise um einen Negativfilm oder aber ein LCD handeln kann, sowie die Eintrittspupille ins Abbildungsobjektiv 13.

Fig. 4a zeigt den Strahlengang eines erfindungsgemäßen Beleuchtungssystems, welches zum Abbilden eines Objekts 12 durch eine Abbildungsoptik 13 dient, für eine Lichtquelle 2. Das optische Element 4 ist dabei so ausgelegt, dass es das Licht der Lichtquelle 2, welches über den Kollimator 8 auf das optische Element trifft, ungehindert passieren lässt, so dass es vom Kondensor über das Objekt 12 auf die Abbildungsoptik 13 fokussiert wird.

Fig. 4b zeigt, wie das Licht, welches von der räumlich getrennten Lichtquelle 3 ausgesandt wird, von dem erfindungsgemäß ausgebildeten optischen Element 4 mit dem Licht der Lichtquelle 2 zusammengeführt wird, so dass das Objekt 12 homogen beleuchtet wird. Die im optischen Element 4 angeordneten Mikroprismen lenken dabei das Licht der Lichtquelle 3 so um, dass es mit dem Licht der Lichtquelle 2 gleichmäßig vermischt wird. Hierzu sind ebenfalls, wie im vorherigen Ausführungsbeispiel im Detail gezeigt, den jeweiligen Lichtquellen 2 und 3 zugeordneten Mikroprismen wechselweise über das optische Element 4 verteilt. In diesem Ausführungsbeispiel wird die virtuelle Lichtquelle 10 vom Kollimator 8 erzeugt, das Prismenarray 4 lenkt das scheinbar von der Lichtquelle 10 ausgesandte Licht so ab, dass es scheinbar von der virtuellen Lichtquelle 9 zu kommen scheint.

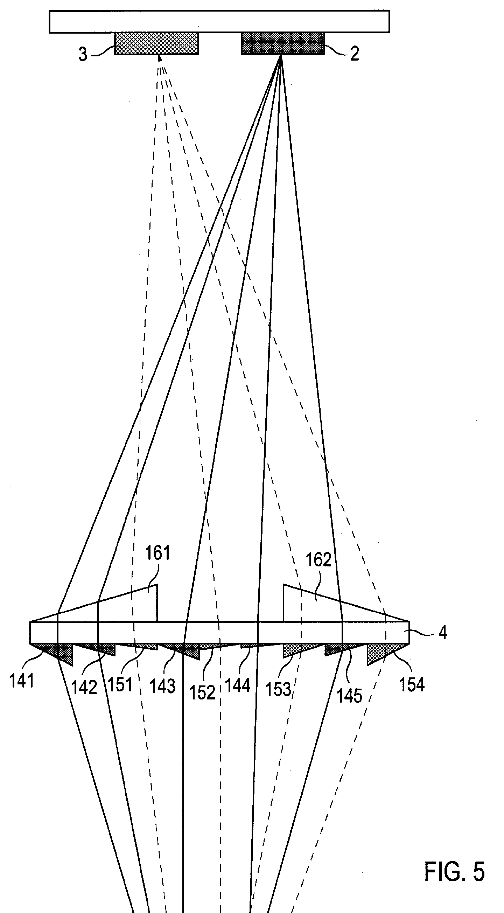

Fig. 5 zeigt in schematischer Darstellung einen Ausschnitt aus dem Beleuchtungsstrahlengang eines weiteren Ausführungsbeispiels eines erfindungsgemäßen Beleuchtungssystems. Auch hier wird die Beleuchtungsstrahlung wiederum von zwei räumlich getrennten Lichtquellen 2 und 3 ausgesandt. Zum Vermischen und Homogenisieren dieser Beleuchtungsstrahlung wird in diesem Ausführungsbeispiel jedoch ein optisches Element 4 verwendet, welches Mikroprismen auf beiden Oberflächen aufweist. Dabei handelt es sich bei den Mikroprismen 141 bis 145 um der Lichtquelle 2 zugeordnete, erfindungsgemäß angeordnete Mikroprismen. 151 bis 154, welche jeweils zwischen erstgenannten Mikroprismen angeordnet sind, sind dagegen der Lichtquelle 3 zugeordnet und leiten deren Licht zum hier nicht dargestellten zu beleuchtenden Objekt. Zusätzlich zu diesen Mikroprismen sind an der anderen Oberfläche des optischen Elements zwei weitere Mikroprismen 161 und 162 angebracht, welche in diesem Ausführungsbeispiel das Licht beider Lichtquellen 2 und 3 bereits in Richtung des hier nicht dargestellten Objekts ablenken, so dass die Ablenkkraft der an der unteren Oberfläche angebrachten Mikroprismen nicht so extrem ausgebildet sein muss. Es wäre jedenfalls vorstellbar, die auf der Oberseite des optischen Elements 4 angeordneten Mikroprismen so auszubilden, dass sie ebenfalls nur das Licht jeweils einer Lichtquelle ablenken.

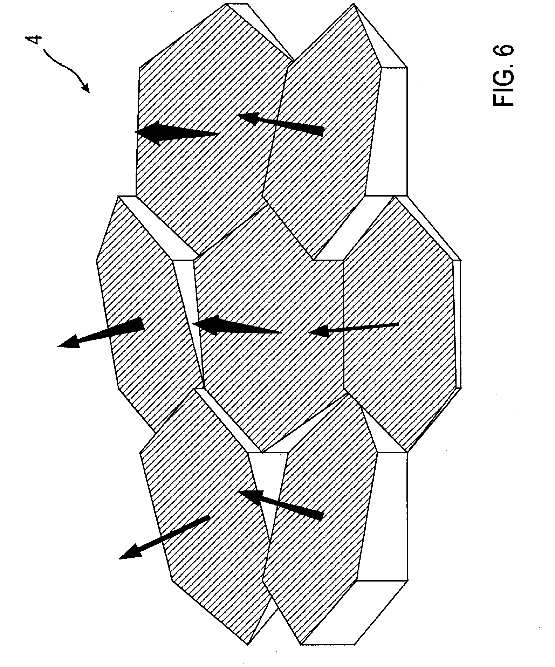

Fig. 6 zeigt beispielhaft schematisch einer Ausschnitt aus der Mikrooberfläche eines erfindungsgemäß ausgestalteten optischen Elements 4.

Die auf der Oberfläche angeordneten Mikroprismen haben jeweils die Form eines Hexagons, da diese Form eine sehr dichte Packung der Mikroprismen erlaubt. Die Mikroprismen sind in unterschiedliche Richtungen abgeschrägt, was anhand der angedeuteten Flächennormalen durch schwarze Pfeile bildhaft gemacht werden soll. Die unterschiedlichen Abschrägungen bewirken, dass das jeweils auftreffende Licht in unterschiedliche Richtungen gebrochen wird. So kann das aus unterschiedlichen Richtungen auftreffende Licht, mittels der unterschiedlichen Ablenkung an verschiedenen Mikroprismen, in einen einheitlichen Beleuchtungsstrahlengang umgelenkt werden. Es wäre ebenfalls möglich, die unterschiedlichen Ablenkrichtungen der Mikroprismen anstatt durch unterschiedliche Schrägen durch verschiedene Brechungsindizes des Mikroprismenmaterials zu realisieren.

**Patentansprüche**

1. Beleuchtungssystem mit mindestens zwei räumlich getrennten Lichtquellen (12, 14) unterschiedlicher Emissionsspektren und einem optischen Element (32), **dadurch gekennzeichnet, dass** das optische Element (32) eine erste Vielzahl von Mikroprismen (44 a-f) aufweist, die die Strahlrichtung des Lichts der ersten Lichtquelle (12) in einer definierten Weise lenken, und eine zweite Vielzahl von Mikroprismen (42 a-f), die die Strahlrichtung des Lichts der zweiten Lichtquelle (14) in einer definierten Weise lenken, wobei die der ersten Lichtquelle zugeordneten Mikroprismen und die der zweiten Lichtquelle zugeordneten Mikroprismen so angeordnet sind, dass sich entlang einer Dimension des optischen Elements mehrmals ein oder mehrere der ersten Lichtquelle zugeordnete Mikroprismen und der zweiten Lichtquelle zugeordnete Mikroprismen abwechseln.

2. Beleuchtungssystem nach Anspruch 1, **dadurch gekennzeichnet, dass** die Lichtquellen (12, 14) so angeordnet und ausgebildet sind, dass ihre Strahlungsfelder überlappen.

3. Beleuchtungssystem nach Anspruch 2, **dadurch gekennzeichnet, dass** das optische Element (32) im Überlappbereich der Strahlungsfelder der Lichtquellen (12, 14) angeordnet ist.

4. Beleuchtungssystem nach Anspruch 3, **dadurch gekennzeichnet, dass** benachbarte Mikroprismen (44a, 42a), die unterschiedlichen Lichtquellen (12, 14) zugeordnet sind, unterschiedliches Strahlablenkverhalten aufweisen.

5. Beleuchtungssystem nach Anspruch 4, **dadurch gekennzeichnet, dass** benachbarte Mikroprismen (44a, 42a) unterschiedliche Brechungsindizes aufweisen.

6. Beleuchtungssystem nach Anspruch 4 oder 5, **dadurch gekennzeichnet, dass** benachbarte Mikroprismen (44a, 42a) unterschiedliche Oberflächenkonturen aufweisen.

7. Beleuchtungssystem nach den Ansprüchen 4 bis 6, **dadurch gekennzeichnet, dass** die Mikroprismen (44 a-f, 42 a-f) ausgelegt sind, die Strahlung derart abzulenken, dass die abgelenkten Strahlen scheinbar von einer Lichtquelle kommen.

8. Beleuchtungssystem nach den Ansprüchen 4 bis 6, **dadurch gekennzeichnet, dass** Mikroprismen (44 a-f, 42 a-f) ausgelegt sind, die Strahlung derart abzulenken, dass von jedem dieser Mikroprisma das Licht einer zugeordneten Lichtquelle auf die Nutzfläche abgelenkt wird und das Licht der mindestens einen anderen Lichtquelle so abgelenkt wird, dass es die Nutzfläche nicht erreicht.

9. Beleuchtungssystem nach Anspruch 1, **dadurch gekennzeichnet, dass** die Mikroprismen (44 a-f, 42 a-f) eine hexagonale Grundstruktur aufweisen.

10. Beleuchtungssystem nach Anspruch 1, **dadurch gekennzeichnet, dass** die Vielzahl von Mikroprismen (44 a-f; 42 a-f pro Lichtquelle (12; 14) entlang einer Dimension des optischen Elements (32) wenigstens 10 umfasst.

11. Beleuchtungssystem nach Anspruch 3, **dadurch gekennzeichnet, dass**, innerhalb eines Makrobereichs von weniger als einem Fünftel der Gesamtdimension, das Verhältnis Z1/Z2 der Anzahl von Mikroprismen pro Lichtquelle abhängig ist vom gewünschten Gesamtintensitätsverhältnis F1/F2 der Farben auf der Nutzfläche und dem tatsächlichen Intensitätsverhältnis I1/I2 der Farben am Ort der Mikroprismen nach folgender Gleichung:

$$\frac{Z1}{Z2} = \frac{F1}{F2} \Big/ \frac{I1}{I2}$$

12. Beleuchtungssystem nach Anspruch 3, **dadurch gekennzeichnet, dass** zur Einstellung einer vorgebbaren Leuchtdichteverteilung die Mikroprismen (44 a-f, 42 a-f) einerseits wirksame Mikroprismen umfassen, die ausgelegt sind, das Licht der zugeordneten Lichtquelle so zu brechen, dass es auf die Nutzfläche fällt, und andererseits Nullprismen, die ausgelegt sind, das Licht aller Lichtquellen so abzulenken, dass es nicht auf die Nutzfläche fällt.

13. Beleuchtungssystem nach Anspruch 12, **dadurch gekennzeichnet, dass** die Anzahl der Nullprismen mit zunehmender Intensität einer Farbe im Bereich der Mikroprismen steigt, so dass die von Makrobereichen abgestrahlte Intensität pro Farbe gleich ist.

14. Beleuchtungssystem nach Anspruch 1, **dadurch gekennzeichnet, dass** die Mikroprismen (44 a-f, 42 a-f) auf einer Oberfläche des optischen Elements (32) angeordnet sind.

15. Beleuchtungssystem nach Anspruch 14, **dadurch gekennzeichnet, dass** die Mikroprismen auf beiden Oberflächen des optischen Elements (32) angeordnet sind.

16. Beleuchtungssystem nach Anspruch 15, **dadurch gekennzeichnet, dass** die Fläche, die von einem größeren Mikroprisma auf einer der Oberflächen eingenommen wird, der Fläche mehrerer kleinerer Mikroprismen auf einer anderen Oberfläche entspricht.

17. Beleuchtungssystem nach Anspruch 16, **dadurch gekennzeichnet, dass** die größeren Mikroprismen ausgelegt sind, für eine zusammenhängende Menge von Einzel-Lichtquellen zumindest einen Teil der Gesamtstrahlablenkung zur Nutzfläche zu übernehmen und die kleineren Mikroprismen ausgelegt sind, den restlichen Anteil der Strahlablenkung zu bewirken.

18. Beleuchtungssystem nach Anspruch 1, **dadurch gekennzeichnet, dass** ein kollimierendes System (30) zwischen den Lichtquellen (12, 14) und dem optischem Element (32) angeordnet ist.

19. Beleuchtungssystem nach Anspruch 7, **dadurch gekennzeichnet, dass** ein Kondensor (34) vorgesehen ist, der das von der scheinbar einen Lichtquelle kommende Licht in die Eintrittspupille (36) eines abbildenden Systems abbildet.

20. Beleuchtungssystem nach Anspruch 1, **dadurch gekennzeichnet, dass** die Lichtquelle LEDs aufweist.

21. Beleuchtungssystem nach Anspruch 1, **dadurch gekennzeichnet, dass** wenigstens eine weitere Lichtquelle (16) mit einem weiteren Emissionsspektrum vorgesehen ist.

22. Beleuchtungssystem nach Anspruch 1, **dadurch gekennzeichnet, dass** die Lichtquellen (12, 14) mit einem vorgebbaren Mindestabstand voneinander angeordnet sind.

23. Beleuchtungssystem nach Anspruch 1, **dadurch gekennzeichnet, dass** die Lichtquellen (12, 14) möglichst nah zusammen angeordnet sind, vorzugsweise in Form eines Hexagons.

FIG. 1

FIG. 2

FIG. 3

FIG. 4b

FIG. 4a

FIG. 5

FIG. 6

## EUROPÄISCHER RECHERCHENBERICHT

**Europäisches Patentamt**

Nummer der Anmeldung

EP 04 10 0735

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 356 577 B1 (MILLER GREGORY DAVID) 12. März 2002 (2002-03-12)<br><br>* Zusammenfassung *<br>* Abbildungen *<br>* Spalte 2, Zeile 6 - Spalte 4, Zeile 63 *<br>----- | 1-4,6-8, 10,11, 14,18-22 | G02B27/12 G02B5/04 |
| X | US 6 337 759 B1 (YAMAMOTO CHIKARA) 8. Januar 2002 (2002-01-08)<br><br>* Abbildung 3 *<br>* Spalte 10, Zeile 2 - Spalte 11, Zeile 67 *<br>----- | 1-4,6, 10,11, 14,15, 18,19 | |
| X | US 2004/012945 A1 (YAMASHITA TOMOYOSHI ET AL) 22. Januar 2004 (2004-01-22)<br>* Abbildungen 2,21,25,27 *<br>* Absatz [0072] *<br>* Absatz [0120] *<br>* Absatz [0136] *<br>* Absatz [0143] *<br>----- | 1,10,14, 20 | |
| A | US 2003/156269 A1 (TANITSU OSAMU ET AL) 21. August 2003 (2003-08-21)<br>* Abbildungen 1-5 *<br>* Abbildungen 24a,24b,25a,25b,26a,26b *<br>* Absatz [0063] - Absatz [0078] *<br>* Absatz [0231] - Absatz [0242] *<br>----- | 1-23 | **RECHERCHIERTE SACHGEBIETE (Int.Cl.7)**<br><br>G02B |
| A | PATENT ABSTRACTS OF JAPAN Bd. 1999, Nr. 04, 30. April 1999 (1999-04-30) & JP 11 025705 A (TOSHIBA CORP), 29. Januar 1999 (1999-01-29) * Zusammenfassung; Abbildungen *<br>----- | 1-23 | |

Der vorliegende Recherchenbericht wurde für alle Patentansprüche erstellt

| Recherchenort | Abschlußdatum der Recherche | Prüfer |
|---|---|---|
| München | 19. Juli 2004 | Windecker, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes Dokument

EPO FORM 1503 03.82 (P04C03)

**EP 1 571 481 A1**

| Im Recherchenbericht angeführtes Patentdokument | | Datum der Veröffentlichung | Mitglied(er) der Patentfamilie | | Datum der Veröffentlichung |
|---|---|---|---|---|---|
| US 6356577 | B1 | 12-03-2002 | AU | 5776600 A | 05-02-2001 |
| | | | JP | 2003516553 T | 13-05-2003 |
| | | | WO | 0106297 A2 | 25-01-2001 |
| US 6337759 | B1 | 08-01-2002 | JP | 2001013462 A | 19-01-2001 |
| | | | DE | 10029861 A1 | 12-04-2001 |
| US 2004012945 | A1 | 22-01-2004 | JP | 2002245823 A | 30-08-2002 |
| | | | CN | 1479848 T | 03-03-2004 |
| | | | EP | 1361392 A1 | 12-11-2003 |
| | | | WO | 0248608 A1 | 20-06-2002 |
| | | | US | 2002163790 A1 | 07-11-2002 |
| US 2003156269 | A1 | 21-08-2003 | JP | 2000284176 A | 13-10-2000 |
| | | | JP | 2001176766 A | 29-06-2001 |
| | | | JP | 2000182933 A | 30-06-2000 |
| | | | JP | 2001085293 A | 30-03-2001 |
| | | | US | 6563567 B1 | 13-05-2003 |
| | | | US | 2003160949 A1 | 28-08-2003 |
| | | | US | 2003156266 A1 | 21-08-2003 |
| | | | EP | 1014196 A2 | 28-06-2000 |
| | | | KR | 2000048227 A | 25-07-2000 |
| JP 11025705 | A | 29-01-1999 | KEINE | | |

EPO FORM P0461